# EUROPÄISCHE PATENTSCHRIFT

(11) **EP 0 888 844 B1**
(45) Veröffentlichungstag und Bekanntmachung des Hinweises auf die Patenterteilung: **24.11.1999**
(21) Anmeldenummer: 98111488.7
(22) Anmeldetag: 23.06.1998
(51) Int. Cl.: B23K 37/08, B23Q 11/00, B30B 9/32

(54) **Vorrichtung zum Abtragen einer Schweissnahtüberhöhung**
Device for removing raised weld bead
Dispositif pour enlever la surélévation d'un cordon de soudure

(30) Priorität: 03.07.1997 DE 19728435
(43) Veröffentlichungstag der Anmeldung: 07.01.1999
(73) Patentinhaber: Dreistern-Werk Maschinenbau GmbH & co. KG, 79650 Schopfheim (DE)
(72) Erfinder: Scherble, Heinz, 79650 Schopfheim (DE)
(74) Vertreter: Schmitt, Hans, Dipl.-Ing.

(56) Entgegenhaltungen:
- EP-A- 0 600 394
- US-A- 3 564 993
- US-A- 5 192 013

## Beschreibung

Die Erfindung betrifft eine Vorrichtung zum Abtragen einer an der Außenseite befindlichen Schweißnahtüberhöhung an während ihres Vorschubes geschweißten Rohren oder Profilen und zum Entsorgen der bei diesem Abtragen mittels eines spanabhebenden Werkzeuges entstehenden Späne (Siehe z.B. EP-A-600394).

Beim Längsnahtschweißen von Rohren oder Profilen wird überwiegend das Hochfrequenz-Schweißverfahren eingesetzt. Bei einem derartigen Herstellungsverfahren für Rohre und Profile wird ein Bandmaterial kontinuierlich zu einem Rohr oder Profil geformt. Dabei werden die Bandkanten erwärmt und mittels Stauchrollen zusammengepreßt. Dadurch entstehen auf der Außen- und der Innenseite des Rohres oder Profiles jeweils eine Schweißnahtüberhöhung, die auf der Außenseite spanabhebend, bevorzugt durch Hobeln, abgetragen wird.

Da dieser Abtragvorgang unmittelbar nach dem Schweißen und unter Ausnutzung des beim Herstellen der Rohre benutzten Vorschubes erfolgt, ist der jeweils abgehobene Span heiß und hat messerscharfe Kanten. Zur Beseitigung dieses Spanes ist es bisher bekannt, ihn auf einen oberhalb des spanabhebenden Werkzeuges angeordneten Späneaufwickler aufzuwickeln (Siehe z.B. US-A-5192013). Eine solche Anordnung bedeutet für die Bedienungsperson eine erhebliche Unfallgefahr, weil der Span jeweils manuell in eine zu dem Späneaufwickler gehörende Aufwickelrolle eingefädelt werden muß. Ist diese Aufwickelrolle gefüllt, muß die Bedienungsperson sie gegen eine leere Aufwickelrolle austauschen und den Span erneut einfädeln.

Es ist deshalb auch schon bekanntgeworden, den Span in einen unterhalb des Werkzeuges angeordneten Spänehacker zu führen und zu zerkleinern. Dies bedeutet jedoch eine große Geräuschentwicklung und birgt ebenfalls erhebliche Unfallgefahren für die Bedienungsperson. Der Span wird nämlich dabei manuell in den Spänehacker geführt und durch umlaufende Messer zerkleinert. Es besteht deshalb die Gefahr, daß die Bedienungsperson von den Messern erfaßt und verletzt wird.

Bei der aus EP-A-600394 bekannten Vorrichtung wird der Span in einen oberhalb des Werkzeuges angeordneten Spänehacker direkt nach dem Abtragen geführt.

Es besteht deshalb die Aufgabe, eine Vorrichtung der eingangs erwähnten Art zu schaffen, mit welcher der oder die Späne so entsorgt werden können, daß für den Bediener keine Unfallgefahr besteht und die Geräuschbildung gering ist, insbesondere den Anforderungen der UVV-Lärm entspricht und unterhalb 85 dB(A) liegt.

Zur Lösung dieser Aufgabe ist die eingangs genannte Vorrichtung dadurch gekennzeichnet, daß unterhalb des oder der spanabhebenden Werkzeuge ein Auffangraum für den/die Späne und in diesem eine Preßvorrichtung zum Zusammendrücken des/der Späne angeordnet sind. Die beispielsweise durch Abhobeln der Schweißnahtüberhöhung der Außennaht erzeugten Späne können also gefahrenfrei und mit geringer Geräuschbildung, insbesondere unter Einhaltung der gesetzlichen Geräusch-Emisionswerte, auf einfache Weise entsorgt werden. Durch die Schwerkraft gelangen die Späne vom Ort ihrer Entstehen aus in den darunter befindlichen Auffangraum, wo sie zunächst gesammelt und dann mit Hilfe der Preßvorrichtung so zu einem Spänepaket zusammengepreßt werden, daß sie nur wenig Raum benötigen. Dabei können in vorteilhafter Weise während des kontinuierlichen Herstellungsverfahrens des Rohres oder Profiles immer wieder solche zusammengepreßten Spänepakete produziert werden.

Besonders zweckmäßig ist es, wenn oberhalb des Auffangraumes Führungswandungen, Leitbleche oder dergleichen Begrenzungen zum Erfassen der herabfallenden Späne und Zuführen zu dem Auffangraum, insbesondere trichterförmig angeordnete Wandungen vorgesehen sind. Der oder die bei ihrer Entstehung in eventuell unterschiedlichen Abweichungen nach unten abgegebenen Späne gelangen auf diese Weise in jedem Falle zwangsweise in den Auffangraum, ohne daß die Bedienungsperson dem in irgend einer Weise nachhelfen muß.

In dem Auffangraum kann ein verstellbarer Pressenstößel geführt sein, der in Ausgangslage den Auffangraum freigibt und bei Gebrauch die in dem Auffangraum befindlichen Späne durch seine Verstellbewegung und die damit einhergehende Verkleinerung des Auffangraumes zusammenpreßt. Der Pressenstößel begrenzt also den Auffangraum nach einer Seite hin und bildet gewissermaßen eine Seitenwandung, die so verstellt werden kann, daß der effektive Raum unter Zusammenpressung seines Inhaltes kleiner wird.

An dem die Späne beim Zusammenpressen aufnehmenden Teil des Auffangraumes, insbesondere an seiner Stirnseite, die der Stößel-Stirnseite gegenüberliegt bzw. der sich der Stößel bei seiner Bewegung nähert, kann eine öffenbare und verschließbare Öffnung, beispielsweise eine Türe, Klappe oder dergleichen angeordnet sein, durch welche das zusammengepreßte Paket der Späne ausschiebbar ist, beispielsweise mittels des Pressenstößels. Somit muß die Bedienungsperson nur diese verschließbare Öffnung öffnen, um das Ausstoßen des Spänepaketes zu bewirken. Dabei kann dieses Öffnen von Hand erfolgen, jedoch kann der stirnseitige Verschluß, insbesondere die stirnseitige Türe auch hydraulisch oder pneumatisch oder elektrisch in Offen- und Schließstellung bewegbar sein. Dies gestattet auch eine Fernbedienung dieses Verschlusses. Darüber hinaus läßt sich so eine Sicherheitssteuerung vorsehen, bei welcher der Pressenstößel nur betätigt werden kann, wenn der Verschluß in Schließstellung ist.

Der Pressenstößel ist zweckmäßigerweise hydraulisch angetrieben, um die erforderlichen Drücke zu erzeugen.

Eine besonders vorteilhafte und zweckmäßige Ausgestaltung der Erfindung kann darin bestehen, daß die obere Eintrittsöffnung in den Auffangraum während des Preßvorganges verschließbar, insbesondere mit dem Vorschub des Pressenstößels synchron verschließbar ist und der Antrieb bzg. die Vorschubstange des Pressenstößels während seiner Betätigung nach oben abgedeckt ist. Dadurch kann verhindert werden, daß Späne oder Spanstücke in den Pressenraum und insbesondere hinter den Pressenstößel gelangen, wo sie die Funktion der Presse erheblich stören und den Kolben des Hydraulikzylinders für die Stößelbetätigung beschädigen könnten.

Diese Abdeckung des Auffangraumes und des Antriebes des Pressenstößels kann in zweckmäßiger Weise darin bestehen, daß an dem Pressenstößel in dessen oberen Randbereich ein Abdeckschild befestigt ist, das während des Pressenhubes mitnehmbar ist und die Öffnung des Auffangraumes dem Vorschub des Pressenstößels gemäß mehr und mehr verschließt. Die Betätigung des Pressenstößels bewirkt also gleichzeitig das Verschließen des Teiles der Öffnung des Auffangraumes, in welchem sich Antriebsteile des Pressenstößels bewegen, so daß keine Späne in diesen Bereich gelangen können.

Dabei kann das Abdeckschild auch den Kolben des Pressenstößels nach oben abschirmen, so daß auch dieser geschützt bleibt.

An der Oberseite des Pressenstößels und an dem von diesem beim Preßvorgang erreichbaren Ende der oberen Öffnung des Auffangraumes können jeweils Teile einer Trenn- oder Abschervorrichtung für die Späne, insbesondere Messerteile oder Schermesser angeordnet sein, die die nachlaufenden Späne beim Zusammenpressen und/oder beim Ausschieben des zusammengepreßten Spänepaketes abtrennen. Da die Späneproduktion während eines solchen Ausschiebens des Spänepaketes weiterläuft, ist es zweckmäßig und vorteilhaft, diese Trennung von dem eigentlichen Spänepaket durchzuführen, wobei der weiterhin entstehende Span dann in vorteilhafter Weise durch die oberhalb des Auffangraumes befindlichen Führungswandungen oder den dort befindlichen Trichter aufgefangen werden können, bis der darunter befindliche Auffangraum durch zurückführen des Stößels und seines Abdeckschildes wieder geöffnet ist. Diese Rückführbewegung des Abdeckschildes streift den bis dahin an seiner Oberseite angefallenen Span oder die Späne gegenüber der rückwärtigen Trichterwand ab und läßt diese bis dahin erzeugten Späne dann in den eigentlichen Auffangraum fallen.

Insgesamt kann also in einer kontinuierlichen Arbeitsweise die Schweißnahtüberhöhung abgetragen werden, während jeweils von Zeit zu Zeit die dabei entstandenen Späne zusammengepreßt und entsorgt werden. Der Vorgang dieser Bildung von Spänepaketen wiederholt sich so lange, wie die Rohrschweißanlage entsprechende Rohre oder Profile produziert Die Entsorgung der Späne ist vor allem dadurch wesentlich verbessert und vereinfacht, daß sie bereits als zusammengepreßtes Paket aus der Vorrichtung ausgeschoben und entnommen werden können.

Nachstehend ist ein Ausführungsbeispiel der Erfindung anhand der Zeichnung näher beschrieben. Es zeigt:
- Fig.1: eine Seitenansicht des Bereiches einer Rohrschweißanlage, in welchem die Vorrichtung zum Abtragen der Schweißnahtüberhöhung an der Außenseite des Rohres oder Profiles angeordnet ist, wobei ein Teil des durchlaufenden Rohres, die davon abgetragenen und nach unten in einen Auffangtrichter einfallenden Späne und die im Unterbau angeordnete Preßvorrichtung zum Zusammendrücken der Späne schematisiert dargestellt sind,

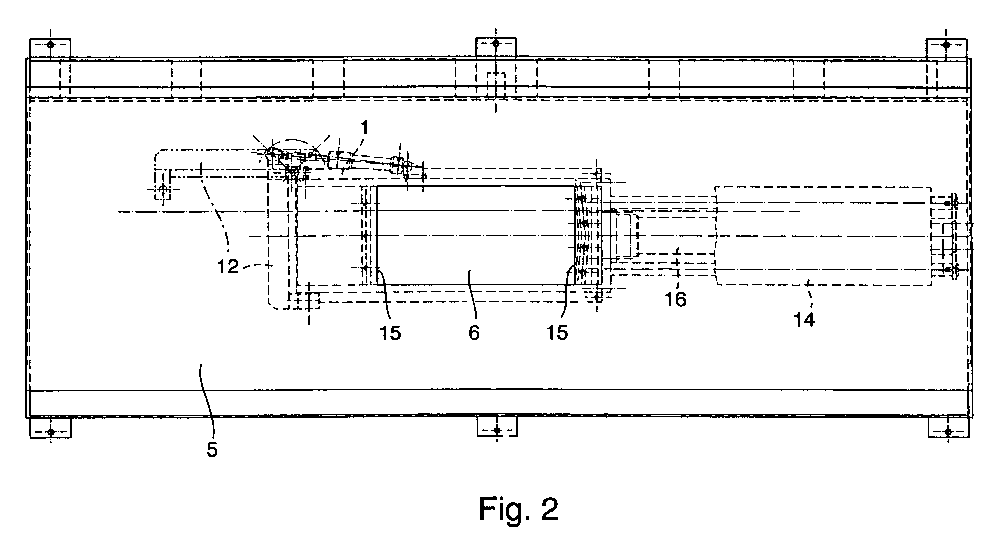

- Fig.2: eine Draufsicht auf die Preßvorrichtung und die Öffnung des Auffangraumes,
- Fig.3: in vergrößertem Maßstab eine Seitenansicht nur der Preßvorrichtung sowie
- Fig.4: eine Draufsicht nur der Preßvorrichtung.

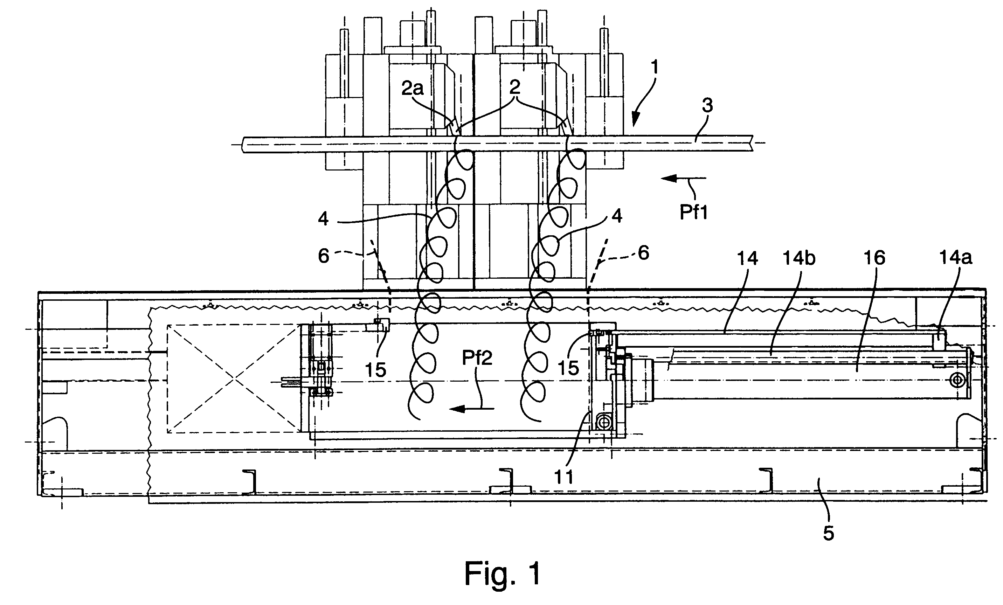

In Fig.1 erkennt man den Schweißbereich 1 einer Rohrschweißanlage und ein dort durchlaufendes Rohr 3, dessen Vorschubbewegung durch den Pfeil Pf1 angedeutet ist. Auf einem Unterbau oder Maschinengestell 5 ist zum Abtragen der beim Schweißen des Rohres 3 an dessen Außenseite entstehenden Nahtüberhöhung ein Außennahthobel 2 mit zwei Werkzeugen 2a vorgesehen, die in Vorschubrichtung hintereinander angeordnet sind. Durch diese Werkzeuge 2a werden beim Abtragen der Schweißnahtüberhöhung in bekannter Weise Späne 4 erzeugt, die durch die Schwerkraft nach unten fallen.

Unterhalb der spanabhebenden Werkzeuge 2a ist ein Auffangraum 13 angeordnet, so daß die Späne 4 durch die Schwerkraft in diesen Auffangraum 3 gelangen können. Dabei erkennt man in Fig.1, daß oberhalb des Auffangraumes 13 Führungswandungen 6 oder Leitbleche als Begrenzungen zum Erfassen der herabfallenden Späne 4 und zum Zuführen zu dem Auffangraum 13 etwa trichterförmig angeordnet sind. Diese Führungswandungen 6 können dabei einen nach den Seiten geschlossenen Trichter bilden, so daß auch bei Seitwärtsbewegungen der Späne 4 diese mit Sicherheit in den Auffangraum 13 zugeführt werden.

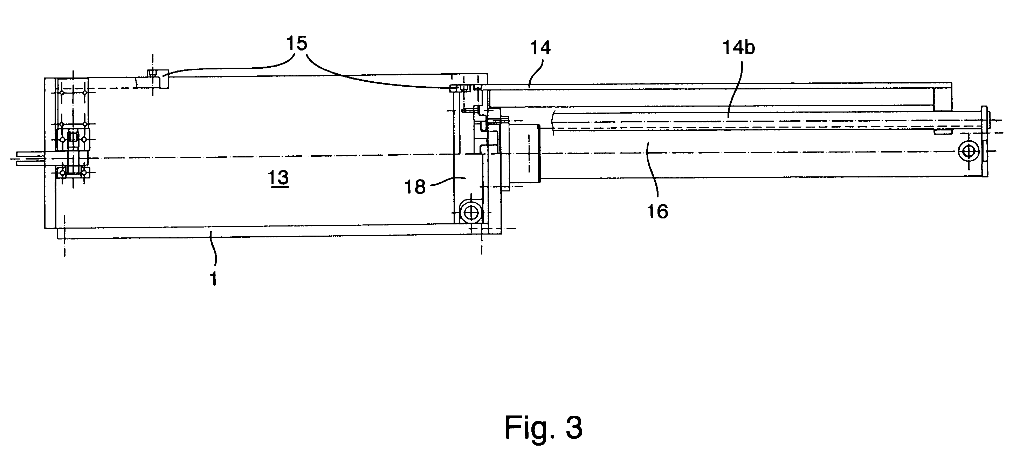

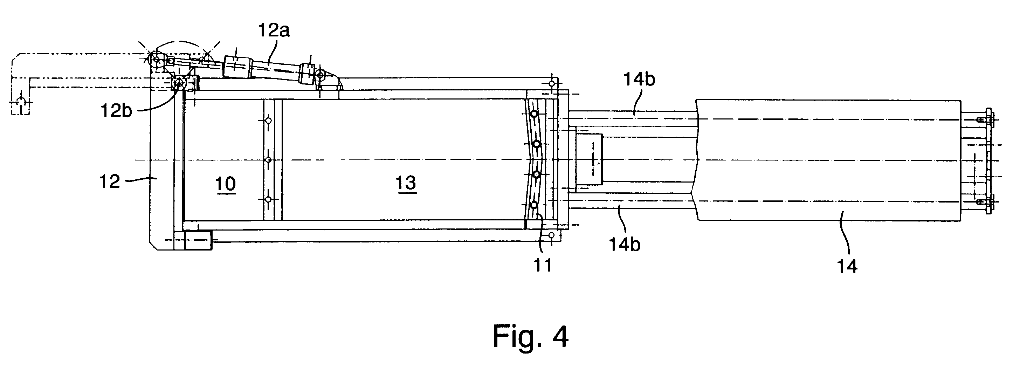

In dem Auffangraum 13 ist eine Preßvorrichtung zum Zusammendrücken der darin gesammelten Späne 4 angeordnet. Diese ist im Ausführungsbeispiel so gestaltet, daß in dem Auffangraum 13 ein in horizontaler Richtung verstellbarer Pressenstößel 11 geführt ist, der in Ausgangslage gemäß Fig.1 und 3 den Auffangraum 13 freiläßt und freigibt und bei Gebrauch, also durch eine Bewegung in Richtung des Pfeiles Pf2 die in dem Auffangraum 13 befindlichen Späne 4 durch seine Verstellbewegung und die damit einhergehende Verkleinerung des Innenraumes des Auffangraumes 13 zusammenpreßt. Dies geschieht mit Hilfe eines Hydraulikzylinders 16, der auf der dem Auffangraum 13 abgewandten Seite des Pressenstößels 11 an diesem angreift. Auf diese Weise können die Späne 4 zu einem Spänepaket 10 (Fig.4) zusammengedrückt und zusammengepreßt werden.

An dem die Späne 4 beim Zusammenpressen, also das Spänepaket 10 aufnehmenden Teildes Auffangraumes, im Ausführungsbeispiel an seiner dem Pressenstößel 11 gegenüberliegenden Stirnseite, ist eine öffenbare und verschließbare Öffnung mit einem Verschluß in Form einer Türe 12 angeordnet, die zum Ausschieben des Spänepaketes 10 geöffnet werden kann. In der Zeichnung ist die Türe 12 in Schließstellung, Ihre Offenstellungjedoch mit gestrichelten Linien ebenfalls dargestellt. Dabei erkennt man vor allem auch in Fig. 4, daß diese stirnseitige Türe 12 hydraulisch oder pneumatisch in Offen- und Schließstellung bewegbar ist und an ihr zu diesem Zweck ein Arbeitszylinder 12a angreift, der die Türe 12 um ein Scharnier 12b verschwenkt. In Offenstellung kann der Pressenstößel 11, der seinerseits durch den Hydraulikzylinder 16 verschoben wird, das Spänepaket 10 auswerfen.

Die obere Eintrittsöffnung in den Auffangraum 13 ist während des Preßvorganges verschließbar und zwar synchron mit dem Vorschub des Pressenstößels 11, so daß der Hydraulikzylinder 16 und der diesem zugehörige Kolben nach oben auch beim Vorschieben des Pressenstößels 11 unter den Bereich, in welchem die Späne 4 herabfallen, abgedeckt und abgeschirmt wird. Somit können keine Späne in den Antriebsbereich des Pressenstößels 11 gelangen und die Funktion dieser Preßvorrichtung 7, insbesondere den Kolben des Hydraulikzylinders 16 stören oder beschädigen.

Erreicht wird dies dadurch, daß an dem Pressenstößel 11 in dessen oberem Randbereich ein Abdeckschild 14 derart befestigt ist, daß es von diesem Pressenstößel 11 aus entgegen dessen Vorschubrichtung über den Hydraulikzylinder 16 ragt und während des Pressenhubes von dem Pressenstößel 11 mitgenommen wird. Dadurch wird die Öffnung des Auffangraumes 13 dem Vorschub des Pressenstößels 11 gemäß mehr und mehr verschlossen. An dem dem Pressenstößel 11 abgewandten Ende ist dieses Abdeckschild 14 mit einer Abstützung 14a versehen, mit welcher es relativ zu einer Führung 14b geführt verstellbar ist. Die Länge des Abdeckschildes 14 ist dabei größer als der Preßhub des Pressenstößels 11, so daß dieser nicht durch das Abdeckschild 14 behindert werden kann. Außerdem ergibt sich dadurch eine ausreichende Abschirmung auch bei Verstellung des Pressenstößels mit seinem größten Hub zum Beispiel beim Ausschieben des Spänepaketes 10.

An der Oberseite des Pressenstößels 11 erkennt man außerdem in den Figuren 1 und 3 einen Teil einer Trenn- oder Abschervorrichtung für die Späne 4, der in Vorschubrichtung etwas über den Pressenstößel 11 übersteht; ebenso ist am Ende der oberen Öffnung des Auffangraumes 13 etwa unterhalb der in Vorschubrichtung zuletzt erreichten Führungswandung 6, jedoch noch mit Abstand zu der Türe 12 ein weiterer Teil dieser Trenn- oder Abschervorrichtung angeordnet, wobei im Ausführungsbeispiel zwei Messerteile oder Schermesser 15 diese Teile bilden und beim Vorschieben des Pressenstößels 11 derart zusammenwirken, daß sie die nachlaufenden Späne beim Zusammenpressen des Spänepaketes 10 oder spätestens beim Ausschiebendes Spänepaketes 10 abtrennen. Dadurch ist es möglich, daß die Produktion der Späne 4 ständig weiterläuft, während der Auffangraum 13 zeitweilig durch das Abdeckschild 14 verschlossen ist, weil gerade ein Spänepaket 10 ausgeworfen wird. Wird dann der Pressenstößel 11 mit dem Abdeckschild 14 wieder zurückgezogen, werden die bis dahin auf dem 16 aufgefangenen Späne 4 von der Führungswand 6 abgestreift, die am Anfang des Auffangraumes 13 angeordnet sind, so daß sie dann in den Auffangraum 13 gelangen, wo weitere Späne 4 aufgefangen werden, bis wieder zu einem Spänepaket 10 zusammenzudrückende Menge zusammengekommen ist.

Es kann also kontinuierlich die Schweißnahtüberhöhung an einem Rohr 3 oder auch einem Profil spanabhebend abgetragen werden, während jeweils periodisch die dabei entstehenden Späne in der geschilderten Weise als Spänepakete 10 gefahrenfrei entsorgt werden.

## Patentansprüche

1. Vorrichtung zum Abtragen einer an der Außenseite befindlichen Schweißnahtüberhöhung anwährend ihres Vorschubes geschweißten Rohren (3) oder Profilen und zum Entsorgen der bei diesem Abtragen mittels eines spanabhebenden Werkzeuges (2a) entstehenden Späne (4), **dadurch gekennzeichnet**, daß unterhalb des oder der spanabhebenden Werkzeuge (2a) ein Auffangraum (13) für den/die Späne (4) und in diesem eine Preßvorrichtung (7) zum Zusammendrücken des/der Späne angeordnet sind.

2. Vorrichtung nach Anspruch 1, dadurch gekennzeichnet, daß oberhalb dem Auffangraum (13) Führungswandungen (6), Leitbleche oder dergleichen Begrenzungen zum Erfassen der herabfallenden Späne (4) und Zuführen zu dem Auffangraum (13), insbesondere trichterförmig angeordnete Wandungen vorgesehen sind.

3. Vorrichtung nach Anspruch 1 oder 2, dadurch gekennzeichnet, daß in dem Auffangraum (13) ein verstellbarer Pressenstößel (11) geführt ist, der in Ausgangslage den Auffangraum (13) freigibt und bei Gebrauch die in dem Auffangraum (13) befindlichen Späne (4) durch seine Verstellbewegung zusammenpreßt.

4. Vorrichtung nach einem der Ansprüche 1 bis 3, dadurch gekennzeichnet, daß an dem die Späne (4) beim Zusammenpressen aufnehmenden Teil des Auffangraumes, insbesondere an seiner Stirnseite, eine öffenbare und verschließbare Öffnung, beispielsweise eine Türe (12), Klappe oder dergleichen angeordnet ist, durch welche das zusammengepreßte Paket der Späne ausschiebbar ist, beispielsweise mittels des Pressenstößels.

5. Vorrichtung nach einem der Ansprüche 1 bis 4, dadurch gekennzeichnet, daß der Pressenstößel (11) hydraulisch angetrieben ist.

6. Vorrichtung nach einem der Ansprüche 1 bis 5, dadurch gekennzeichnet, daß der stirnseitige Verschluß, insbesondere die stirnseitige Türe (12), hydraulisch oder pneumatisch oder elektrisch in Offen- und Schließstellung bewegbar ist.

7. Vorrichtung nach einem der Ansprüche 1 bis 6, dadurch gekennzeichnet, daß die obere Eintrittsöffnung in den Auffangraum (13) während des Preßvorganges verschließbar, insbesondere mit dem Vorschub des Pressenstößels (11) synchron verschließbar ist und der Antrieb bzw. die Vorschubstange des Pressenstößels während seiner Betätigung nach oben abgedeckt ist.

8. Vorrichtung nach einem der Ansprüche 1 bis 7, dadurch gekennzeichnet, daß an dem Pressenstößel (11) in dessen oberen Randbereich ein Abdeckschild (14) befestigt ist, das während des Pressenhubes mitnehmbar ist und die Öffnung des Auffangraumes (13) dem Vorschub des Pressenstößels (11) gemäß mehr und mehr verschließt.

9. Vorrichtung nach einem der Ansprüche 1 bis 8, dadurch gekennzeichnet, daß das Abdeckschild (14) auch den Kolben des Pressenstößels nach oben abschirmt.

10. Vorrichtung nach einem der Ansprüche 1 bis 9, dadurch gekennzeichnet, daß an der Oberseite des Pressenstößels (11) und am Ende der oberen Öffnung des Auffangraumes (13) jeweils Teile einer Trenn- oder Abschervorrichtung für die Späne, insbesondere Messerteile oder Schermesser (15) angeordnet sind, die die nachlaufenden Späne beim Zusammenpressen und/oder beim Ausschieben des zusammengepreßten Spänepaketes (10) abtrennen.

## Claims

1. Apparatus for removing excess material on the outside of a weld seam on tubes (3) or sections welded as they move along, and for removing any chips (4) produced during this removal by a metal-cutting tool (2a), characterised in that below the metal-cutting tool or tools (2a) there is a collecting chamber (13) for collecting the chips (4) and in this chamber is a press (7) for compressing the chips.

2. Apparatus according to claim 1, characterised in that above the collecting chamber (13) there are guide walls (6), deflector plates or similar boundaries for collecting the chips (4) as they fall and guiding them to the collecting chamber (13), in particular there are walls arranged to form a funnel shape.

3. Apparatus according to claim 1 or 2, characterised in that in the collecting chamber (13) there is a movable presser ram (11) which opens up the collecting chamber in the starting position and when in use compresses the chips (4) located in the collecting chamber (13) by its movement.

4. Apparatus according to one of claims 1 to 3, characterised in that on the part of the collecting chamber which receives the chips (4) during the compression process, particularly at the end face thereof, is an openable and closable aperture, e.g. a door (12), flap or the like, through which the compressed bundle of chips can be ejected, e.g. by means of the presser ram.

5. Apparatus according to one of claims 1 to 4, characterised in that the presser ram (11) is operated hydraulically.

6. Apparatus according to one of claims 1 to 5, characterised in that the closure in the end face, particularly the door in the end face (12), is movable into the open and closed positions hydraulically or pneumatically or electrically.

7. Apparatus according to one of claims 1 to 6, characterised in that the upper entry aperture into the collecting chamber (13) is closable during the compression process, and in particular can be closed in synchronism with the advance of the presser ram (11), and the drive or advancing rod of the presser ram is covered at the top during its operation.

8. Apparatus according to one of claims 1 to 7, characterised in that attached to the presser ram (11) in the upper edge portion thereof is a cover plate (14), which can be carried along during the compression stroke and closes off the aperture in the collecting chamber (13) more and more in accordance with the advance of the presser ram (11).

9. Apparatus according to one of claims 1 to 8, characterised in that the cover plate (14) also screens off the piston of the presser ram at the top.

10. Apparatus according to one of claims 1 to 9, characterised in that on the upper side of the presser ram (11) and at the end of the upper aperture of the collecting chamber (13) are located parts of a severing or shearing device for the chips, particularly blade portions or shearing blades (15) which cut off the trailing chips during the compression process and/or as the compressed bundle of chips (10) is being ejected.

## Revendications

1. Dispositif pour enlever la surélévation d'un cordon de soudure se trouvant sur le côté extérieur de tubes (3) ou de profilés soudés pendant leur avancement, et pour l'élimination des copeaux se formant pendant cet enlèvement au moyen d'un outil d'usinage (2a), **caractérisé en ce** qu'une chambre de récupération (13) est disposée en dessous de l'outil ou des outils d'usinage (2a) pour le copeau/les copeaux (4) et que dans celle-ci est installé un dispositif de pression (7) pour la compression du copeau/des copeaux.

2. Dispositif selon la revendication 1, **caractérisé en ce que** des parois de guidage (6), des tôles-guides ou des imitations similaires, notamment des parois disposées en forme d'entonnoir, sont prévues au-dessus de la chambre de récupération (13) pour capter les copeaux (4) retombant et les amener à la chambre de récupération (13).

3. Dispositif selon la revendication 1 ou 2, **caractérisé en ce** qu'un coulisseau (11) réglable est guidé dans la chambre de récupération (13), lequel, en position initiale, libère la chambre de récupération (13) et, en service, comprime les copeaux (4) se trouvant dans la chambre de récupération (13) par son mouvement de déplacement.

4. Dispositif selon l'une des revendications 1 à 3, **caractérisé en ce que** sur la pièce de la chambre de récupération recevant les copeaux (4) lors de la compression, notamment sur sa face frontale, est disposée une ouverture pouvant être ouverte et fermée, par exemple un volet (12), un clapet ou une pièce similaire, par laquelle le paquet de copeaux comprimés peut être éjecté, par exemple au moyen du coulisseau.

5. Dispositif selon l'une des revendications 1 à 4, **caractérisé en ce que** le coulisseau (11) est entraîné de manière hydraulique.

6. Dispositif selon l'une des revendications 1 à 5, **caractérisé en ce que** la fermeture du côté frontal, notamment le volet (12) du côté frontal, est déplaçable en position ouverte et fermée de manière hydraulique ou pneumatique ou électrique.

7. Dispositif selon l'une des revendications 1 à 6, **caractérisé en ce que** l'ouverture d'entrée supérieure de la chambre de récupération (13) peut être fermée pendant le processus de compression, notamment de manière synchrone à l'avance du coulisseau (11) et que l'entraînement ou la tige d'avancement du coulisseau est recouvert(e) vers le haut pendant son déplacement.

8. Dispositif selon l'une des revendications 1 à 7, **caractérisé en ce** qu'une plaque couvrante (14) est fixée sur la partie supérieure du coulisseau (11), cette plaque pouvant être entraînée pendant la course de pression et fermant l'ouverture de la chambre de récupération (13) au fur et à mesure de l'avance du coulisseau (11).

9. Dispositif selon l'une des revendications 1 à 8, **caractérisé en ce que** la plaque de repérage (14) couvre aussi le piston du coulisseau vers le haut.

10. Dispositif selon l'une des revendications 1 à 9, **caractérisé en ce que** des pièces d'un dispositif de séparation et de cisaillement des copeaux, notamment des pièces de lames ou des lames à cisailler (15), sont respectivement placées sur le côté supérieur du coulisseau (11) et à l'extrémité de l'ouverture supérieure de la chambre de récupération (13), lesquelles pièces séparent les copeaux arrivant à la suite lors de la compression et/ou lors de l'éjection du paquet de copeaux comprimés.
